Europäisches Patentamt

European Patent Office

Office européen des brevets

(11) Veröffentlichungsnummer : **0 042 620 B1**

(12) **EUROPÄISCHE PATENTSCHRIFT**

(45) Veröffentlichungstag der Patentschrift :
16.04.86

(21) Anmeldenummer : **81104857.8**

(22) Anmeldetag : **23.06.81**

(51) Int. Cl.⁴ : **A 01 C 3/02, C 02 F 3/02**

(54) **Vorrichtung zum Aufbereiten von Gülie.**

(30) Priorität : 23.06.80 DE 3023428

(43) Veröffentlichungstag der Anmeldung :
30.12.81 Patentblatt 81/52

(45) Bekanntmachung des Hinweises auf die Patenterteilung : 16.04.86 Patentblatt 86/16

(84) Benannte Vertragsstaaten :
AT CH DE FR GB IT LI

(56) Entgegenhaltungen :
EP-A- 0 008 462
AT-B- 352 033
CH-A- 593 712
DE-A- 2 434 935
DE-A- 2 612 255
DE-B- 2 248 685
US-A- 3 778 233

(73) Patentinhaber : Ostermaier, Josef

D-8251 Wielerstett 3 (DE)

(72) Erfinder : Ostermaier, Josef

D-8251 Wielerstett 3 (DE)

(74) Vertreter : Wächtershäuser, Günter, Dr.
Tai 29
D-8000 München 2 (DE)

Jouve, 18, rue St-Denis, 75001 Paris, France

**Beschreibung**

Die Erfindung betrifft eine Vorrichtung zur Belüftung von Gülle oder Flüssigmist in einem Güllebehälter mit einer in die Gülle eintauchenden Gehäusepumpe mit Pumpenwelle und einem Pumpenrotor, mit einer Einrichtung zur dosierten Eintragung von feinblasiger Luft in die von der Pumpe bewegte Gülle und mit einem etwa horizontal oder schräg nach unten frei in die Gülle gerichteten Güllestrahlauslaß, aus dem der Güllestrahl gerichtet in die Gülle austritt. Eine solche Vorrichtung ist aus der DE-A 24 34 935 bekannt. Bei der bekannten Vorrichtung wird der Güllestrom durch Rohrleitungen von der Gehäusepumpe zunächst aufwärts zu einer über dem Güllespiegel gelegenen Belüftungseinrichtung geführt und von dieser wieder abwärts in die Gülle, wo er schließlich durch einen Krümmer horizontal austritt. Wegen der langen und mehrfach gekrümmten Güllerohrleitung sind die erreichbaren Strömungsgeschwindigkeiten gering. Die Lufteintragung ist unzureichend und großblasig, so daß die Luftblasen in der Gülle rasch nach oben steigen. Außerdem kommt es wegen des Gehaltes an Stroh, Gras oder dergleichen häufig zu Verstopfungen. Ein ähnlicher Belüfter ist aus der DE-A 26 12 255 bekannt sowie aus der DE-B 22 48 685.

Ferner sind bereits Oberflächenbelüfter für Gülle oder andere Flüssigkeiten bekannt, bei denen die Flüssigkeit durch einen senkrecht oder schräg unter die Oberfläche ragenden Propeller unter Lufteintragung gerührt wird (EP-A 8 462 ; CH-A 59 37 12 ; US-A 37 78 233 ; US-A 36 14 072 ; FR-A 12 38 593 ; OE-B 22 00 92 ; DE-C 74 39 84 ; DE-C 89 34 70 ; DE-A 17 82 485 ; DE-A 21 48 894 ; DE-A 22 50 827). Diese Geräte sind jedoch zur gleichmäßigen und wohldosierten Belüftung großdimensionierter Güllegruben ungeeignet.

Gem. der DE-A 29 20 540 ist ein Propeller innerhalb eines senkrechten und unten offenen Rohres angeordnet und erzeugt einen senkrecht nach unten gerichteten Güllestrahl. Bei der CH-A 57 20 08 wird die Gülle von einer Gehäusepumpe angesaugt und sodann durch eine Rohrleitung, welche aus dem Behälter heraus geführt ist und sodann wieder in den Boden des Behälters eintritt, in einem senkrechten Strahl nach oben geführt. Beide Anlagen sind zur gleichmäßigen Belüftung großdimensionierter Güllegruben ungeeignet.

Aus der DE-A 12 70 873 ist eine Vorrichtung zur Förderung von Gülle bekannt. Dabei ist ein Pumpenwerkzeug am Boden der Grube angeordnet. Es erzeugt einen Güllestrom, welcher durch einen im Betonboden der Grube angeordneten Kanal aus der Güllegrube ausströmt. Zur Belüftung der in der Güllegrube stehenden Gülle ist dieses Gerät weder vorgesehen noch geeignet.

Die US-A 32 06 176 beschreibt eine Vorrichtung zur Belüftung von städtischen Abwässern. Dabei befindet sich ein Kompressor am unteren Ende der Vorrichtung, d. h. unterhalb des Flüssigkeitsspiegels. Andererseits befindet sich innerhalb eines senkrechten Rohres ein Propeller. Die Druckluft des Kompressors wird über feine Kanäle in die Propellerschaufeln eingeführt und tritt an verschiedenen peripheren Öffnungen der Propellerschaufeln in Form von feinen Blasen aus. Das Abwasser wird durch den Propeller in axialer Richtung angesaugt und in axialer Richtung ausgestoßen und sodann in einem Knie zu einem horizontalen Strahl umgelenkt. Wegen der Notwendigkeit eines in dem Abwasser angeordneten Luftkompressors ist dieses Gerät äußerst aufwendig. Außerdem ist es wegen der Gefahr von Verstopfungen für die Belüftung von Gülle nicht geeignet.

Alle bisher bekannten Güllebelüftungsvorrichtungen haben den Nachteil, daß zwar eine intensive Umwälzung der Gülle und eine starke Belüftung derselben in unmittelbarer Nähe des Rührwerkzeuges bewirkt wird, jedoch die Umwälzung und Belüftung der rührwerkzeugfernen Bereiche der Gülle in der Grube äußerst gering ist oder völlig unterbleibt. Bei den bekannten Vorrichtungen erfolgt andererseits die Belüftung in der Nähe des Rührwerkzeuges in so starkem Maße, daß erhebliche Mengen Ammoniak und Stickstoff entwickelt und durch die Luftblasen aus der Gülle herausgeführt werden. Hierdurch wird der Düngewert der Gülle stark beeinträchtigt.

Der Erfindung liegt somit die Aufgabe zugrunde, eine Vorrichtung zur Belüftung von Gülle zu schaffen, welche sich dadurch auszeichnet, daß die Gülle auch in großdimensionierten Gruben gleichmäßig und störungsfrei belüftet wird, so daß die Gülle auch bei längerer Lagerung ihren Düngewert nicht verliert und insbesondere keine nennenswerten Verluste an Ammoniak und Stickstoff auftreten.

Diese Aufgabe wird erfindungsgemäß dadurch gelöst, daß die Gehäusepumpe eine Zentrifugalpumpe ist, mit etwa axialem Gülleeintritt und etwa tangentialem Gülleaustritt, und daß die Luftsaugleitung der Einrichtung zur Lufteintragung von der Atmosphäre über der Gülle bis zu einer von der Zentrifugalpumpe erzeugten Unterdruckzone unter den Güllespiegel führt.

Das richtige Maß an Belüftung läßt sich verhältnismäßig einfach dadurch feststellen, daß die sich normalerweise auf Güllegruben bildende Schwimmdecke nur eine leichte und leicht zerstörbare weiche Decke sein soll, die verhältnismäßig dünn ist, also nur eine Dicke in der Größenordnung von 5 bis 20 cm — in der Regel von etwa 10 bis 15 cm — aufweist. Eine zu starke Belüftung führt zu einem Durchbrechen und Zerstören der Schwimmdecke, eine zu geringe Belüftung führt zu einer Verdickung und Verdichtung der Schwimmdecke. Dadurch, daß im Gegensatz zu den vorbekannten Verfahren mit der erfindungsgemäßen Vorrichtung eine horizontale luftbläschendurchsetzte Strömung erzeugt wird, kann die Strömung das erreichen, was mit den bisherigen Vertikalströmungen nur angestrebt, aber nicht erreicht wurde, nämlich eine horizontale rotierende Strömung. Diese Strömung wird durch den Güllestrahl bewirkt, der mit der erfindungsgemäßen Vorrichtung erzeugt wird.

Sinkteile (Halme und dergl) werden dabei mit Luft behaftet, steigen dann zur Schwimmdecke und werden dort durch aerobe Bakterien abgebaut und hierbei weitgehend in flüssige und gasförmige Substanzen umgesetzt. Dadurch wird eine Verschlammung fast ganz vermieden. Wenn oben bei der Definition der Erfindung davon gesprochen ist, daß die Horizontalrichtung des Strahls etwa mit der Umlaufrichtung der rotierenden Strömung zusammenfallen soll, so soll dies also nicht heißen, daß eine rotierende Strömung vorhanden sein muß, die mit der Strahlrichtung zusammenfällt, sondern daß die Strahlrichtung so gewählt sein soll, daß sie mit der Richtung einer horizontalen rotierenden Strömung zusammenfällt, wie sie sich etwa ausbilden würde, wenn in der Güllegrube im Sinne einer rotierenden Strömung umgerührt würde und nach Erzeugen der rotierenden Strömung die Gülle sich selbst überlassen würde, so daß sie weiter rotieren könnte. In Richtung dieser optimalen Strömung soll der Güllestrahl gerichtet sein.

Dadurch, daß der Güllestrahl waagerecht bis leicht nach unten gerichtet ist — der Winkel kann bis zu 30° nach unten gerichtet sein — zweckmäßig liegt er bei etwa 20° — ist dafür gesorgt, daß zumindest in dem auf den Strahl folgenden Teil der rotierenden Strömung die Auftriebskraft der Luftbläschen im horizontal strömenden Teil durch die nach unten gerichtete kinetische Energie kompensiert wird. Da der Strahl die ihn umgebende Gülle ansaugt, erzeugt er nach wenigen Betriebsminuten bereits die gewünschte rotierende Strömung, die praktisch den ganzen Grubeninhalt erfaßt. Erleichtert wird dies dadurch, daß die Strahlerzeugung ja notwendig mit einer Ansaugung verbunden ist, die ebenfalls zur Erzeugung der rotierenden Strömung beiträgt.

Vorzugsweise wird die Luft beim Eintragen zu sehr feinen Bläschen verteilt, deren Durchmesser unter einem Millimeter, besser noch unter einem halben Millimeter liegen.

Das Ansaugen der Gülle in der Erzeugungsstelle des Strahles erfolgt vorzugsweise von unten. Dadurch werden auch die unterhalb der Strahlerzeugungsstelle liegenden, nicht vom Strahl selbst erfaßten Güllebereiche mit erfaßt, in Bewegung versetzt und mit Luft durchmischt.

Der Strahl wird nahe dem Boden der Grube erzeugt. In der Praxis hat sich ein Abstand der Strahlerzeugungsstelle vom Boden von etwa 1/2 m bewährt. Dadurch wird der Weg der feinen Luftbläschen bei ihrem Aufsteigen groß, ferner wird die Rotation der ganzen Flüssigkeitsmenge begünstigt, da ein Rotieren der tieferliegenden Gülleteile das Rotieren der darüber befindlichen Gülleteile leicht hervorruft, insbesondere, wenn die tieferliegenden rotierenden Gülleteile zugleich das Bestreben haben, aufgrund der in ihnen enthaltenen Luft nach oben zu steigen.

Bevorzugt wird der Strahl nahe der Wand der Grube, etwa parallel zu dieser erzeugt. Zweckmäßig wird der Strahl bei rechteckigen Gruben nahe der längeren Wand erzeugt. Bei rechteckigen Gruben, was insoweit auch quadratische Gruben umfassen soll, wird der Strahl vorzugsweise in großem Abstand von der in Strahlrichtung nächstfolgenden Grubenecke erzeugt, damit der Strahl nicht unmittelbar mit großer kinetischer Energie auf eine quer verlaufende Wand prallt, sondern dieser quer verlaufenden Wand nur noch die langsame Rotationsströmung zufließt, die dort leicht umgelenkt werden kann.

Mit der Vorrichtung nach der Erfindung kommt man mit relativ geringen Umwälz- und Belüftungszeiten aus. Bei normalen Gruben bis zu etwa 300 m³ Inhalt genügt es, wenn das Umwälzen und Belüften zwei- bis dreimal täglich jeweils 8 bis 15 Minuten lang erfolgt. Bewährt hat sich in der Praxis bei durchlaufendem Betrieb eine Umwälz- und Belüftungszeit von etwa zwei Minuten pro Tag und Großvieheinheit.

Die Erfindung betrifft auch eine Anlage mit einem Gülle behälter und einer Vorrichtung zur Belüftung von Gülle nach Anspruch 1. Diese Anlage ist durch die Merkmale in den Ansprüchen 1-4 gekennzeichnet.

Die Erfindung bildet die bekannten Anlagen dahingehend weiter, daß einerseits die ganze Gülle in der Grube umgewälzt werden kann (sofern die Grube einen üblichen beispielsweise rechteckigen, quadratischen oder runden Grundriß hat und nicht gerade einen winkelförmigen oder sternförmigen Grundriß) und daß ferner die Belüftung der Gülle in einem solchen Maß und derart erfolgt, daß die für den biologischen Abbau der Gülle zu einem optimalen Dünger erforderliche Luftmenge zugeführt werden kann, ohne jedoch zu viel Luft zuzuführen, die aus der Gülle Stickstoff und Ammoniak abführen könnte.

Die erfindungsgemäße Vorrichtung kann und soll so in der Nähe des Randes der Güllegrube, beispielsweise in einem Abstand von etwa einem halben Meter von diesem Rand angeordnet werden, daß die Austrittsöffnung des Pumpengehäuses parallel zur Güllegrubenwand gerichtet ist. Auf diese Weise wird die Gülle von der Gehäusepumpe angesaugt und in Richtung der Austrittsöffnung ausgestoßen. Dadurch entsteht in der Güllegrube eine Rotationsströmung längs des Randes derselben, die zwar langsam ist, aber die gesamte Gülle in der Grube erfaßt, so daß diese gleichmäßig umgewälzt und mit Luft versetzt werden kann. Dadurch, daß die Zuluftleitung im Inneren des Pumpengehäuses mündet und daß eine Drosseleinrichtung zum Regeln des Zuluftstroms vorgesehen ist, ist nicht nur gewährleistet, daß die Zuluft sehr gleichmäßig in dem aus dem Gehäusepumpenauslaß austretenden Güllestrom verteilt ist. Durch diese gleichmäßige und feine Verteilung und die langsame Rotation der gesamten Gülle in der Grube und auch längs deren Wänden wird eine optimale Feinverteilung der Luft gewährleistet, ohne daß diese sofort an die Oberfläche der Gülle steigt. Die in feinster Bläschenform verteilte Luft hat, bis sie an der Oberfläche der Gülle ankommt, genügend Zeit, im rotierenden Strom der Gülle sich über die ganze Grube zu verteilen. Da die Luft nur in feinen Bläschen nach oben steigt und hierbei auch Schwebstoffe mit sich nimmt, bildet sich oben auf der Güllegrube eine Schwimmschicht, welche in erster Linie aus den in der Gülle vorhandenen Pflanzenresten und Luftbläschen besteht. Diese Schwimmschicht isoliert die Gülle insbesondere im Winter nicht nur thermisch. Die in ihr verrottenden Pflanzenteile tragen ebenfalls zur Düngewirkung der Gülle bei und verhindern ein Austreten der Gase.

Wesentlich ist bei der Erfindung natürlich, daß der Gehäusepumpenaustritt und der Eintritt derselben nicht so angeordnet sind, daß sich eine Kurzschlußströmung vom Austritt zum Eintritt ausbildet. Dementsprechend sollte die Eintrittsöffnung nicht nur örtlich im Abstand von der Austrittsöffnung, sondern auch in einem erheblichen Winkelunterschied in bezug auf die Austrittsöffnung angeordnet sein. Das wird bei der erfindungsgemäßen Vorrichtung dadurch erreicht, daß die Pumpe eine Zentrifugalpumpe mit zentralem axialen Eintritt und tangentialem Austritt ist.

In konstruktiver Hinsicht wird die Ausbildung der Vorrichtung nach der Erfindung besonders einfach, wenn man den Pumpenrotor unmittelbar auf einer die Zuluftleitung bildenden Hohlwelle lagert. Die Hohlwelle verbindet dann den außerhalb der Gülle angeordneten Antriebsmotor mit dem Pumpenrotor.

Wesentlich ist bei der Erfindung, daß die Luft so in das Pumpengehäuse eingebracht wird, daß sie dort unter dem Einfluß des Pumpenrotors feinst verteilt in den das Pumpengehäuse verlassenden Güllestrom eingespeist wird. Dies wird besonders einfach und vorteilhaft erreicht, indem der Pumpenrotor im wesentlichen die Form einer Kreisscheibe erhält, welche auf einer Seite mehrere, vorzugsweise vier, in Axialrichtung von der Scheibe und in Radialrichtung von der Welle abragende Schaufeln trägt, in welchen aus dem Inneren der Zuluftleitung kommende Zuluftkanäle verlaufen, die zwischen der Nabe des Rotors und dem Schaufelende an einer oder mehreren Stellen münden. Versuche haben gezeigt, daß hierdurch eine sehr feine Luftverteilung erreicht wird. Dabei sollten die Scheibe oben und die Schaufeln unter der Scheibe angeordnet sein. Die Leistungsaufnahme der Pumpe wird verringert, wenn man den Schaufelkreisdurchmesser um etwa 1/2 bis 1 Zentimeter geringer hält aus den Scheibendurchmesser.

Zumindest bei — wie das bevorzugt wird — senkrecht angeordneter Hohlwelle sitzt die Eintrittsöffnung des Pumpengehäuses vorteilhaft an der Unterseite. Dadurch ist der erforderliche örtliche und Winkelabstand der Eintritts öffnung von der Auslaßöffnung gewährleistet. Um den Abstand hier besonders groß zu machen, kann man den Auslaßkanal des Pumpengehäuses relativ lang ausbilden.

Wesentlich ist wie oben dargelegt bei der Erfindung, daß die durch die Vorrichtung in die Gülle eingespeiste Luftmenge nicht zu gering und nicht zu groß ist. Insbesondere besteht hier die Gefahr der Zuführung einer zu großen Luftmenge. Um die hier vorliegenden funktionellen und technischen Bedingungen optimal zu lösen, ist es vorteilhaft, die in einer das Pumpengehäuse tragenden Hülse geführte Rührwerkzeugwelle an ihrem dem Rührwerkzeug abgewandten Ende mit einer Lufteintrittsöffnung zu versehen, welcher ein einstellbares Drosselorgan zugeordnet ist. Das Drosselorgan kann beispielsweise in einer das obere Ende der Hülse luftdicht mit dem Antriebsmotor verbindenden Abkapselung vorgesehen sein und aus einer Bohrung mit einem Durchmesser von z. B. 10 mm bestehen, in welche ein konisches Drosselglied nach Bedarf mehr oder weniger eingeschraubt werden kann, so daß der freie Strömungsquerschnitt abnimmt, je mehr das konische Drosselglied eingeschraubt ist und umgekehrt.

Weitere vorteilhafte Ausbildungen der Erfindung gehen aus der nachfolgenden Beschreibung der als Beispiel in der Zeichnung gezeigten bevorzugten Ausführungsform des Geräts nach der Erfindung hervor.

Figur 1 zeigt die Vorrichtung nach der Erfindung in Ansicht teilweise im Schnitt ;

Figur 2 zeigt in gegenüber Fig. 1 vergrößertem gegenüber der tatsächlichen Dimensionierung immer noch wesentlich verkleinertem maßstab die Gehäusepumpenanordnung nach der Erfindung im Axialschnitt in bezug auf die den Pumpenrotor tragenden Hohlwelle ;

Figur 3 zeigt die Ansicht von unten auf den Rotor der Pumpe der Vorrichtung ;

Figur 4 zeigt die Ansicht von links auf Fig. 3 ;

Figur 5 zeigt die Ansicht von unten auf das am unteren Ende der die Hohlwelle tragenden und umgebenden Schutzhülse anschließende Pumpengehäuse ;

Figur 6 zeigt schematisch die Draufsicht auf die Strömung in einer Güllegrube bei Betrieb der Anlage nach der Erfindung.

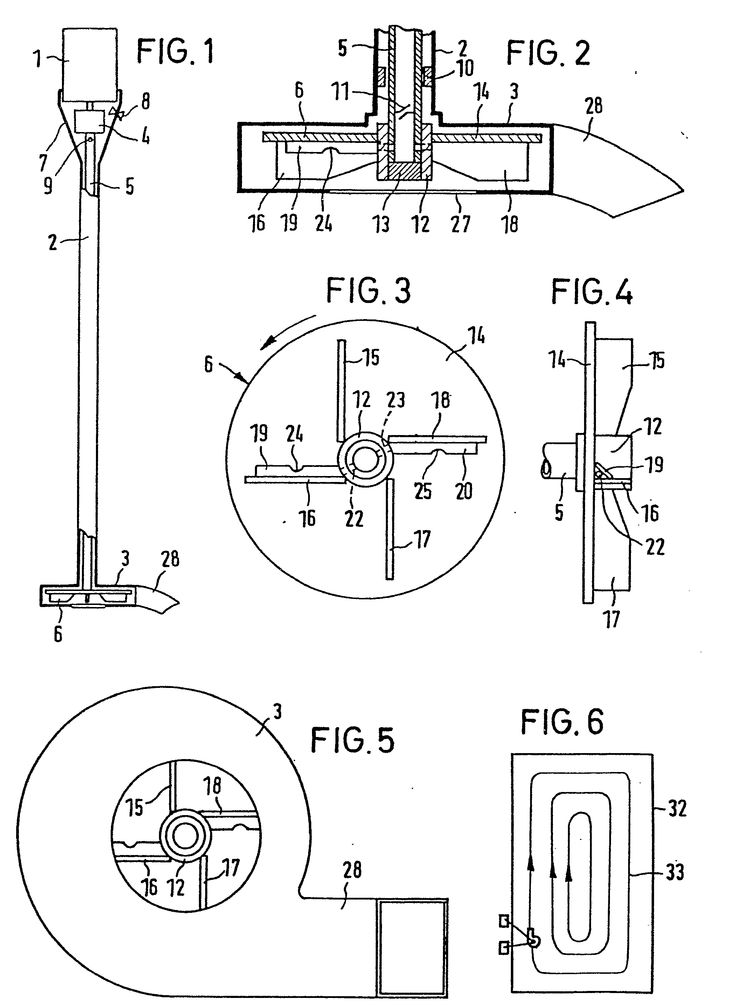

Das in Fig. 1 teilweise im Schnitt schematisch dargestellte Gerät besteht im wesentlichen aus einem Antriebsmotor 1, einer an die Antriebsseite des Motors luftdicht angeschlossenen Schutz- und Führungshülse 2, einem unten an die Führungshülse anschließenden Pumpengehäuse 3, einer auf die Antriebswelle des Motors 1 aufgesetzten Kupplung 4, einer an die Kupplung angeschlossenen in der Führungshülse 2 drehbar gelagerten Antriebswelle 5 und einem im Pumpengehäuse 3 rotierenden Pumpenrotor 6. Das Gerät ist selbstverständlich auch mit elektrischen Anschlüssen für den Motor, Befestigungsmitteln zum Befestigen desselben, beispielsweise am Rand einer Güllegrube und was dergleichen mehr sein sollte, versehen.

Wie aus der Zeichnung ersichtlich, ist die Führungshülse 2 mittels eines konisch erweiterten oberen Teiles 7 mit dem Elektromotor 1 verbunden. Dieser läuft zweckmäßig mit einer Drehzahl in der Größenordnung von 1 000 Umdrehungen pro Minute um, wenn der Durchmesser des Pumpenrotors bei 25 bis 30 cm liegt.

In dem erweiterten Teil 7 befindet sich ein nur schematisch angedeutetes Drosselventil 8, welches eine genaue Regelung der durch den Pumpenrotor 6 über das Innere der Hohlwelle 5, eine an deren oberem Ende befindliche Bohrung 9 und durch das Innere der Erweiterung 7 angesaugten Luftmenge erlaubt.

Die Führungshülse 2 und die Hohlwelle 5 haben je nach Bedarf eine Länge von z. B. 3 oder 4 m. Die Länge sollte so gewählt sein, daß die Pumpe etwa 0,5 m über dem Boden der Güllegrube angebracht werden kann. In diesem Zusammenhang ist darauf hinzuweisen, daß eine Pumpe nach der Erfindung mit äußerst geringer Betriebszeit auskommt. So hat sich gezeigt, daß bei Güllegruben mit einem Gesamtinhalt von etwa 250 m³ eine zweimalige tägliche Betriebszeit einer Vorrichtung nach der Erfindung von etwa 8 bis 15 Min. je nach Frischgülleanfall vollständig ausreichend ist.

Die Hohlwelle 5 ist, wie gesagt, in der Führungshülse 2 geführt und gelagert. Das untere Lager ist in Fig. 2 bei 10 angedeutet.

Am unteren Ende der Hohlwelle 2 ist noch innerhalb derselben ein Rückschlagventil 11 vorgesehen, welches nur schematisch angedeutet ist und ein Eintreten der Gülle von unten nach oben in das Innere der Hohlwelle 5 verhindert. Das ist insbesondere beim Winterbetrieb von erheblicher Bedeutung.

Am unteren in das Gehäuse 3 der Pumpe ragenden Ende der Hohlwelle 11 sitzt die Nabe 12 des Pumpenrotors 6, die dort in nicht gezeigter Weise verstiftet ist. Nach unten ist die Nabe 12 mittels eines Stopfens 13 abgeschlossen. Auf der Nabe sitzt beispielsweise mit dieser verschweißt die Tragescheibe 14 des Rotors 6, die im normalen Betrieb bei senkrechter Hohlwelle 5 in einer horizontalen Ebene umläuft. An die Tragscheibe 6 sind gleichmäßig über den Umfang verteilt vier in Axialebenen verlaufende Schaufeln 15, 16, 17 und 18 angeordnet, die mit der Scheibe 14 und der Nabe 12 verschweißt sind. Die Schaufeln sind, wie aus Fig. 3 ersichtlich, nicht genau in Axialebenen des Rotors 6 angeordnet, sondern in der aus Fig. 3 ersichtlichen Weise gegenüber diesen Axialebenen parallel in Drehrichtung nach vorn verschoben. Die Schaufeln 15 bis 18 stoßen mit ihren inneren Enden jeweils an die Nabe 12 an. Um ein Verstopfen der Pumpe durch Faserstoffe und Pflanzenreste zu vermeiden, sind die Rührschaufeln in ihren nabennahen inneren Teilen, wie aus Fig. 2 und 4 ersichtlich, schräg über dem Bereich der Eintrittsöffnung 27 des Pumpengehäuses 3 zurückgesetzt. Bei dieser Ausbildung ist die Gefahr von Verstopfungen, wie Versuche gezeigt haben, nicht gegeben. Dem Grunde nach ist natürlich auch eine andere Zahl von Schaufeln möglich. Vier Schaufeln haben sich jedoch im Versuch gut bewährt.

Vorteilhaft reichen die Schaufeln radial nach außen nicht bis zum äußersten Rand der kreisförmigen Tragscheibe, sondern enden ein kurzes Stück von beispielsweise 2 bis 10 mm innerhalb des äußersten Randes der Scheibe. Überraschenderweise wird bei einer solchen Ausbildung eine erhebliche Verringerung der erforderlichen Antriebsenergie erreicht.

Zum Einbringen und Feinverteilen der Luft dienen zwei Luftzuführungskanäle, die von der unteren Oberfläche der Tragscheibe 14, einer Oberfläche der beiden Schaufeln 16 und 18 und je einem schräg zwischen die Tragscheibe 14 und die entsprechende Schaufel 16 bzw. 18 geschweißten Flacheisen 19 bzw. 20 gebildet werden. Die zwischen der Tragscheibe 14, den Schaufeln 16 bzw. 18 und den schrägen Flacheisen 19 bzw. 20 gebildeten dreieckigen Kanäle sind, wie aus Fig. 3 und 4 ersichtlich, jeweils über eine Bohrung 22 bzw. 23 mit dem Inneren der Hohlwelle verbunden, so daß bei Rotation des Pumpenrotors Luft über die Drosselstelle 8, die Bohrung 9 der Hohlwelle 5, die Hohlwelle 5, die Bohrungen 22, 23 und die erwähnten dreieckigen Kanäle im Bereich der Schaufeln 16 bzw. 18 angesaugt wird. Die Luft tritt aus diesen dreieckigen Kanälen nicht nur an deren in bezug auf die Hohlwelle radial äußeren Enden aus, sondern auch aus weiteren Austrittsöffnungen, die von jeweils etwa in der Mitte der Flacheisen 19 und 20 vorgesehenen Ausschnitten 24 bzw. 25 gebildet werden. Eine derartige Ausbildung hat sich in der Praxis gut bewährt.

Am unteren Ende der Hülse 2 ist mit dieser fest verbunden das Gehäuse 3 der Pumpe angeordnet. Dieses Gehäuse ist ein übliches Spiralgehäuse, welches zentral unterhalb der Nabe 12 eine Eintrittsöffnung hat, deren Durchmesser etwa gleich dem halben Durchmesser der Tragscheibe 14 ist. In axialer Richtung ist der Abstand des Pumpenrotors vom Gehäuse gering. Er beträgt hier beispielsweise 5 bis 15 mm. In radialer Richtung erweitert sich der Abstand der Gehäuseumfangswand in üblicher Weise bis zum Austrittskanal 28, der zweckmäßig in einem leichten Winkel von z. B. 20° nach unten gerichtet ist. Dadurch, daß der Austrittskanal leicht nach unten gerichtet ist, erhält die ausströmende Gülle eine Bewegungskomponente nach unten, welche der Tendenz der durch die Luftbeimischung leichter gemachten Gülle nach oben zu steigen entgegenwirkt. Dadurch wird eine besonders gute Belüftung auch in Bodennähe erreicht.

In Fig. 6 ist die durch die Erfindung angestrebte ideale Strömung in Form von Stromfäden 33 in der Güllegrube 32 veranschaulicht.

## Patentansprüche

1. Vorrichtung zur Belüftung von Gülle oder Flüssigmist in einem Güllebehälter
   mit einer in die Gülle eintauchenden Gehäusepumpe mit Pumpenwelle und einem Pumpenrotor,
   mit einer Einrichtung zur dosierten Eintragung von feinblasiger Luft in die von der Pumpe bewegte Gülle und

mit einem etwa horizontal oder schräg nach unten frei in die Gülle gerichteten Güllestrahlauslaß, aus dem der Güllestrahl gerichtet in die Gülle austritt, dadurch gekennzeichnet, daß die Gehäuse, pumpe eine Zentrifugalpumpe (3) ist, mit etwa axialem Gülleeintritt und etwa tangentialem Gülleaustritt, und daß die Luftsaugleitung der Einrichtung zur Lufteintragung von der Atmosphäre über der Gülle bis zu einer von der Zentrifugalpumpe erzeugten Unterdruckzone unter den Güllespiegel führt.

2. Anlage mit einem Güllebehälter und einer Vorrichtung zur Belüftung von Gülle nach Anspruch 1, dadurch gekennzeichnet, daß die Vorrichtung so in dem Güllebehälter (32) angeordnet ist, daß der Güllestrahl nahe dem Boden des Güllebehälters (32) austritt.

3. Anlage nach Anspruch 2, dadurch gekennzeichnet, daß die Vorrichtung so in dem Güllebehälter (32) angeordnet ist, daß der Güllestrahl nahe einer Wand des Güllebehälters (32) angeordnet ist und etwa parallel zu dieser austritt.

4. Anlage nach einem der Ansprüche 2 oder 3, dadurch gekennzeichnet, daß die Vorrichtung so in dem Güllebehälter (32) angeordnet ist, daß der Güllestrahl in größtmöglichem Abstand von der in Strahlrichtung nächstfolgenden Güllebehälterecke austritt.

**Claims**

1. Apparatus for aeration of liquid manure in a liquid manure container

with a housing pump having a pump shaft and a pump rotor, said pump being emersed in the liquid manure,

with a device for dosaged introduction of finely divided air bubbles into the liquid manure, which is moved by the pump, and

with an outlet for liquid manure stream, which is directed about horizontally or slanted downwardly freely into the liquid manure, from which outlet the liquid manure stream is discharged into the liquid manure in a directed manner, characterized in that the housing pump is a centrifugal pump (3) having an about axial liquid manure inlet and an about tangential liquid manure outlet, and that the air suction duct of the device for air introduction leads from the atmosphere above the liquid manure to a low pressure zone below the liquid manure surface said low pressure zone being produced by the centrifugal pump.

2. Installation with a liquid manure container and an apparatus for aeration of liquid manure according to claim 1, characterized in that the apparatus is disposed in the liquid manure container (32) in such a fashion that the liquid manure stream is discharged near to the bottom of the liquid manure container (32).

3. Installation according to claim 2, characterized in that the apparatus is disposed in the liquid manure container (32) in such a fashion that the liquid manure stream is disposed closely to a wall of the liquid manure container (32) and is discharged about in parallel with respect to the wall.

4. Installation according to one of claims 2 or 3, characterized in that the apparatus is disposed in the liquid manure container (32) in such a fashion that the liquid manure stream is discharged with the greatest possible distance in the direction of the stream from the next corner of the liquid manure container.

**Revendications**

1. Dispositif pour l'aération de purin ou de fumier liquide dans une cuve à purin, ce dispositif comportant :

une pompe à carter, immergée dans le purin et munie d'un arbre et d'un rotor de pompe ;

un moyen pour l'introduction dosée de fines bulles d'air dans le purin mis en mouvement par la pompe ; et

un organe d'éjection d'un jet de purin qui s'étend librement dans le purin, tout en étant orienté dans une direction sensiblement horizontale ou inclinée vers le bas et hors duquel s'échappe le jet de purin, dirigé dans le purin, caractérisé en ce que la pompe à carter est une pompe centrifuge (3) comportant une admission sensiblement axiale pour le purin et un refoulement sensiblement tangentiel pour le purin, et en ce que le conduit d'aspiration d'air du moyen d'introduction d'air s'étend depuis un point de l'atmosphère situé au-dessus du purin jusqu'à une zone de dépression engendrée par la pompe centrifuge et située au-dessous de la surface libre du purin.

2. Installation comprenant une cuve à purin et un dispositif pour l'aération du purin selon la revendication 1, caractérisée en ce que le dispositif est installé dans la cuve à purin (32) de telle façon que le jet de purin s'échappe à proximité du fond de la cuve à purin (32).

3. Installation selon la revendication 2, caractérisée en ce que le dispositif est installé dans la cuve à purin (32) de telle façon que le jet de purin s'étende à proximité d'une paroi de la cuve à purin (32) et s'échappe dans une direction sensiblement parallèle à celle-ci.

4. Installation selon l'une des revendications 2 ou 3, caractérisée en ce que le dispositif est installé dans la cuve à purin (32) de telle façon que le jet de purin s'échappe à une distance la plus grande possible du coin de la cuve à purin le plus proche dans la direction du jet.

0 042 620

FIG.1

FIG.2

FIG.3

FIG.4

FIG.5

FIG.6